# EUROPÄISCHE PATENTSCHRIFT

(11) **EP 3 299 617 B1**
(45) Veröffentlichungstag und Bekanntmachung des Hinweises auf die Patenterteilung: **16.12.2020**
(21) Anmeldenummer: 16190868.6
(22) Anmeldetag: 27.09.2016
(51) Int. Cl.: F03D 80/30

(54) **BLITZREZEPTOR FÜR EIN WINDENERGIEANLAGENROTORBLATT**
LIGHTNING RECEPTOR FOR A WIND TURBINE ROTOR BLADE
RÉCEPTEUR D'ATMOSPHÉRIQUES POUR UNE PALE DE ROTOR D'ÉOLIENNES

(43) Veröffentlichungstag der Anmeldung: 28.03.2018
(73) Patentinhaber: Nordex Energy GmbH, 22419 Hamburg (DE)
(72) Erfinder: Kremer, Jochen, 22299 Hamburg (DE); Ohlerich, Nick, 18055 Rostock (DE)
(74) Vertreter: Hauck Patentanwaltspartnerschaft mbB

(56) Entgegenhaltungen:
- EP-A1- 2 722 522
- EP-A1- 2 930 352
- WO-A2-2012/012198
- DE-A1-102014 202 951

## Beschreibung

Die Erfindung betrifft einen Blitzrezeptor für ein Windenergieanlagenrotorblatt mit einem Befestigungsabschnitt und einem rotationssymmetrischen Kopf. Derartige Blitzrezeptoren können im Bereich der Blattspitze, aber auch in einem Abstand davon an der Saug- und/oder Druckseite eines Windenergieanlagenrotorblatts eingesetzt werden. Sie sind mit einem oder mehreren, in dem Windenergieanlagenrotorblatt angeordneten Blitzschutzleitern verbunden, um die sehr hohen Ströme von in die Blitzrezeptoren einschlagenden Blitzen abzuführen. Zumeist werden die Blitzrezeptoren mit einer sogenannten Blitzrezeptorbasis, die häufig aus einem massiven metallischen Körper besteht, verschraubt und die Blitzrezeptorbasis wird mit einem Blitzschutzleiter verbunden.

Aus der Druckschrift WO 2012/012198 A2 sind scheibenförmige Blitzrezeptoren bekannt, die jeweils eine flächige Stirnseite aufweisen.

Aus der Druckschrift EP 2 518 312 A1 sind Blitzrezeptoren mit einem scheibenförmigen Grundkörper bekannt geworden, an dessen Stirnseite eine oder mehrere Spitzen ausgebildet sind. Die Spitzen sollen die Attraktivität für einschlagende Blitze erhöhen.

Aus der Druckschrift WO 2014/023734 A1 ist ein Windenergieanlagenrotorblatt mit einer Kohlenstofffaser-Heizeinrichtung bekannt geworden. Eine Blitzschutzeinrichtung weist Blitzrezeptoren in Form von Gewindebolzen mit flachem, an der Stirnseite konvex gekrümmtem Kopf auf.

Aus der Druckschrift DE 10 2014 202 951 A1 sind Blitzrezeptoren für Windenergieanlagenrotorblätter mit einem rotationssymmetrischen Kopf bekannt geworden, der einen Sockelabschnitt und einen konvex gekrümmten Endabschnitt aufweist. Als Befestigungsabschnitt dient ein Innengewinde, in das ein Gewindestift eingeschraubt wird.

Aus der Druckschrift EP 2 722 522 A1 ist ein Blitzschutzrezeptor mit den Merkmalen des Oberbegriffs des Anspruchs 1 bekannt geworden.

Trotz der grundsätzlich gegebenen Funktionsfähigkeit der bekannten Blitzrezeptoren kommt es in der Praxis immer wieder zu Beschädigungen von Rotorblättern, die mit derartigen Blitzrezeptoren ausgestattet sind. Die Erfinder haben insbesondere beobachtet, dass einzelne Blitze nicht wie vorgesehen in die Blitzrezeptoren selbst einschlagen, sondern eng benachbart dazu in eine Umgebung des Blitzrezeptors. Von dort bahnen sie sich einen Weg zum Blitzschutzleiter, zum Beispiel an einem Blitzrezeptor vorbei durch ein Laminat des Windenergieanlagenrotorblatts in eine Blitzrezeptorbasis hinein. Immer wieder kommt es dabei zu Beschädigungen des Windenergieanlagenrotorblatts, die allenfalls mit großem Aufwand behoben werden können.

Davon ausgehend ist es die Aufgabe der Erfindung, einen Blitzrezeptor für ein Windenergieanlagenrotorblatt zur Verfügung zu stellen, der einen besseren Schutz des Windenergieanlagenrotorblatts vor Beschädigungen durch Blitzschlag bietet.

Diese Aufgabe wird gelöst durch den Blitzrezeptor mit den Merkmalen des Anspruchs 1. Vorteilhafte Ausgestaltungen sind in den sich anschließenden Unteransprüchen angegeben.

Der Blitzrezeptor ist für ein Windenergieanlagenrotorblatt vorgesehen und hat einen Befestigungsabschnitt und einen rotationssymmetrischen Kopf, der einen Sockelabschnitt und einen konvex gekrümmten Endabschnitt aufweist, wobei der Sockelabschnitt und der Endabschnitt an einer Kante aneinandergrenzen, die einen Kreis mit einem Radius a beschreibt, wobei eine eine Rotationsfläche des Kopfes erzeugende Kurve an der Kante um einen Winkel im Bereich von 5° bis 45° in Richtung zu einer Rotationsachse hin abknickt und im Bereich des Endabschnitts eine Krümmung aufweist, deren Krümmungsradius überall im Bereich von a bis 3a liegt.

Der Befestigungsabschnitt dient zur Befestigung des Blitzrezeptors an dem Windenergieanlagenrotorblatt. Er kann insbesondere mit einer Blitzrezeptorbasis, die im Inneren des Windenergieanlagenrotorblatts angeordnet und mit diesem insbesondere verklebt ist, verschraubt werden. Der Kopf ist rotationssymmetrisch, d.h. seine äußere Fläche ist eine Rotationsfläche, die von einer sogenannten erzeugenden Kurve durch Rotation um eine Rotationsachse erzeugt wird.

Der rotationssymmetrische Kopf weist zwei Längsabschnitte auf, nämlich einen Sockelabschnitt und einen Endabschnitt. Der Sockelabschnitt ist im montierten Zustand des Blitzrezeptors in der Regel einer Blitzrezeptorbasis zugewandt, während der Endabschnitt konvex gekrümmt ist und im montierten Zustand des Blitzrezeptors an einer Außenseite des Windenergieanlagenrotorblatts angeordnet ist. Sockelabschnitt und Endabschnitt bilden zwei Längsabschnitte, die unmittelbar aneinander angrenzen, wobei an der Grenze zwischen Sockelabschnitt und Endabschnitt eine Kante ausgebildet ist, die einen Kreis mit einem Radius a beschreibt. Der Befestigungsabschnitt kann innerhalb des rotationssymmetrischen Kopfes ausgebildet sein, jedoch auch einen zusätzlichen Längsabschnitt bilden, insbesondere an der vom Endabschnitt entfernten Seite des Sockelabschnitts.

Die Besonderheit der Erfindung besteht in der Kombination einer nach außen weisenden Kante zwischen Sockelabschnitt und Endabschnitt und einer relativ stark ausgeprägten Krümmung des Endabschnitts. Die Erfinder haben erkannt, dass die Attraktivität herkömmlicher Blitzrezeptoren für Blitze unter anderem von der Polarität des Blitzes abhängt. Hierzu tragen freie Ladungsträger bei, die in einer Umgebung des Blitzrezeptors durch Ionisation entstehen.

Bei sogenannten Negativblitzen ist das Rotorblatt positiv und eine das Rotorblatt umgebende Wolke negativ geladen. In diesem Fall werden negative Elektronen in einer Umgebung des Blitzrezeptors von dem positiv geladenen Blitzrezeptor schneller abgesaugt, als sich die relativ schweren, positiv geladenen Ionen von dem Blitzrezeptor entfernen. Es kommt daher in einer Umgebung des Blitzrezeptors zu einer positiven Raumladung, die eine "virtuelle Verlängerung" des Blitzrezeptors darstellt. Wegen der lokal erhöhten Feldstärke tritt dieser Effekt besonders ausgeprägt an Kanten und Spitzen des Blitzrezeptors auf. Er begünstigt ein unmittelbares Einschlagen von Negativblitzen in Blitzrezeptoren mit entsprechenden Spitzen oder Kanten.

Bei den selteneren, häufig jedoch besonders energiereichen Positivblitzen ist das Rotorblatt negativ und eine das Rotorblatt umgebende Wolke positiv geladen. In diesem Fall entfernen sich die negativ geladenen Elektronen relativ schnell von der Blattspitze, während die weniger beweglichen, positiv geladenen Ionen zurückbleiben und von der negativ geladenen Blattspitze angezogen werden. Dadurch entsteht eine positive Raumladungszone um den negativ geladenen Blitzrezeptor herum, was einer Abschirmung des Blitzrezeptors gleichkommt. Blitzeinschläge abseits der Blattspitze werden durch diesen Effekt wahrscheinlicher. In Verbindung mit den besonders hohen Energien der Positivblitze kommt es durch diesen Effekt vermehrt zu schweren Beschädigungen. Die Erfinder haben erkannt, dass der Effekt nicht nur an Spitzen und Kanten von Blitzrezeptoren wegen der dort auftretenden, besonders hohen Feldstärken auftritt, sondern im Betrieb eines Windenergieanlagenrotorblatts insbesondere Blitzschläge in flächig ausgebildete, scheibenförmige Blitzrezeptoren verhindern kann.

Bei der Erfindung weist der Blitzrezeptor in seinem im Wesentlichen freiliegenden Endabschnitt daher weder ebene Flächen, noch ausgeprägte Kanten oder Spitzen auf, sondern stattdessen eine mehr oder weniger gleichmäßige Krümmung mit einem relativ kleinen Krümmungsradius. Wie Versuche bestätigt haben, ist dieser Endabschnitt vor allem für die besonders gefährlichen Positivblitze attraktiv.

Zusätzlich weist der erfindungsgemäße Blitzrezeptor zwischen Sockelabschnitt und Endabschnitt eine Kante auf, die eine erhöhte Attraktivität für Negativblitze hat. Dies erhöht die Wahrscheinlichkeit, dass alle in der Praxis auftretenden Blitze unmittelbar in den Blitzrezeptor einschlagen.

Die Kante ist durch den Knick in der erzeugenden Kurve in einem Winkelbereich von 5° bis 45° relativ stumpf ausgebildet, was für den gewünschten Effekt jedoch ausreichend ist. Je kleiner der Winkel ist, desto ausgeprägter kann die Krümmung des Endabschnitts ausgeführt werden. Bevorzugt liegt der Winkel in einem Bereich von 20° bis 40°, insbesondere bei etwa 30°.

Der Krümmungsradius befindet sich für jeden Punkt der erzeugenden Kurve innerhalb des Endabschnitts in einem Bereich zwischen a und 3a. Der Krümmungsradius kann in dem genannten Bereich variieren, sodass der Endabschnitt insgesamt beispielsweise elliptisch, linsen- oder parabelförmig ausgebildet sein kann. Besonders bevorzugt liegt der Krümmungsradius in einem Bereich zwischen a und 2a, insbesondere bei etwa 1,5a.

In einer Ausgestaltung weist der Sockelabschnitt eine Länge im Bereich von 1 mm bis 5 mm auf. Insbesondere kann die Länge im Bereich von 2 mm bis 4 mm liegen, z.B. bei etwa 3 mm. Diese Länge ist für die elektrodynamische Wirksamkeit der Kante ausreichend und stellt gleichzeitig eine ausreichende Stromtragfähigkeit des Blitzrezeptors im Bereich der unter Umständen filigran ausgebildeten Kante sicher.

In einer Ausgestaltung ist der Sockelabschnitt zylindrisch. Grundsätzlich kann der Sockelabschnitt eine abweichende Form aufweisen, beispielsweise ganz oder teilweise gekrümmt oder leicht konisch. Bei einer zylindrischen Ausbildung des Sockelabschnitts kann sich die Fertigung und insbesondere der Einbau des Blitzrezeptors vereinfachen.

In einer Ausgestaltung weist der Sockelabschnitt an seinem von dem Endabschnitt entfernten Ende eine kreisringförmige Kontaktfläche auf. Über diese Kontaktfläche kann die elektrische Verbindung zu einer Blitzrezeptorbasis hergestellt werden, entweder unmittelbar oder mittelbar, beispielsweise über eine oder mehrere zwischen Blitzrezeptorbasis und Blitzrezeptor eingefügte Hülsen oder Scheiben. Die Herstellung des elektrischen Kontakts über die kreisringförmige Kontaktfläche ist einer elektrischen Kontaktierung über den Befestigungsabschnitt wegen der größeren Kontaktfläche in der Regel überlegen. Das Verhältnis vom Durchmesser der Kontaktfläche zum Außendurchmesser des Befestigungsabschnitts beträgt mindestens 3:1, bevorzugt mindestens 4:1.

In einer Ausgestaltung weist der Endabschnitt eine Länge im Bereich von a/2 bis a auf. In diesem Bereich wird ein guter Kompromiss zwischen Kompaktheit und Attraktivität für Blitze erreicht.

In einer Ausgestaltung weist der Endabschnitt einen einheitlichen Krümmungsradius auf. In diesem Fall ist der Endabschnitt kugelabschnittsförmig. Wie bereits erwähnt, ist grundsätzlich auch eine andere Krümmung möglich, beispielsweise linsenförmig oder elliptisch. Ein kugelabschnittsförmiger Endabschnitt ist für den erläuterten Effekt jedoch optimal.

In einer Ausgestaltung weist der Befestigungsabschnitt einen Außendurchmesser auf, der kleiner ist als der Radius a. Der Befestigungsabschnitt kann ebenfalls rotationssymmetrisch ausgebildet sein, insbesondere zu derselben Rotationsachse wie der Kopf, und sich an den Sockelabschnitt anschließen, und zwar an der vom Endabschnitt abgewandten Seite des Sockelabschnitts. Durch den relativ geringen Außendurchmesser des Befestigungsabschnitts wird dieser wirksam von dem Kopf des Blitzrezeptors abgeschirmt.

In einer Ausgestaltung weist der Befestigungsabschnitt ein Außengewinde auf. In diesem Fall kann der Blitzrezeptor unmittelbar in ein Innengewinde einer Blitzrezeptorbasis eingeschraubt werden.

In einer Ausgestaltung weist der Kopf eine oder mehrere Öffnungen zum Einsetzen eines Steckschlüssels auf. Beispielsweise kann die Öffnung ein Innensechskant sein. Möglich sind jedoch auch zwei oder mehr in einem Abstand von der Rotationsachse des Kopfes und insbesondere parallel zu dieser Rotationsachse angeordnete Öffnungen, in die komplementär geformte Zapfen eines Steckschlüssels eingesetzt werden können. So kann der Blitzrezeptor bei relativ geringfügen Abweichungen von der idealen Form besonders einfach eingeschraubt werden.

In einer Ausgestaltung ist der Blitzrezeptor einteilig aufgebaut. Insbesondere kann es sich um ein Drehteil handeln, das aus einem massiven Rundmaterial hergestellt worden ist.

In einer Ausgestaltung besteht der Blitzrezeptor aus Edelstahl, Kupfer, Aluminium, Messing, einem anderen Metall oder einer Legierung aus den genannten Materialien. Es wird eine gute Leitfähigkeit bei hoher Korrosionsbeständigkeit und einfacher Fertigung erreicht.

In einer Ausgestaltung richtet sich die Erfindung auf ein Windenergieanlagenrotorblatt mit einem Blitzrezeptor nach einem der Ansprüche 1 bis 11. Der Blitzrezeptor kann elektrisch leitend mit einem Blitzschutzleiter des Windenergieanlagenrotorblatts verbunden sein.

In einer Ausgestaltung weist das Windenergieanlagenrotorblatt eine Blitzrezeptorbasis auf, mit der der Blitzrezeptor verschraubt ist. Hierzu kann die Blitzrezeptorbasis beispielsweise im Inneren des Windenergieanlagenrotorblatts eingeklebt oder während eines Vakuuminfusionsverfahrens zur Herstellung des Rotorblatts in dieses integriert worden sein. Die Blitzrezeptorbasis kann ein Innengewinde aufweisen, in das ein Außengewinde des Befestigungsabschnitts des Blitzrezeptors eingeschraubt ist.

In einer Ausgestaltung des Windenergieanlagenrotorblatts steht der Endabschnitt des Blitzrezeptors aus einer aerodynamischen Fläche des Windenergieanlagenrotorblatts heraus, insbesondere aus einer Druckseite oder aus einer Saugseite. Der Endabschnitt ist dadurch für Blitze frei zugänglich. Die Aerodynamik des Windenergieanlagenrotorblatts wird nur geringfügig beeinträchtigt.

In einer Ausgestaltung ist der Sockelabschnitt in eine Wandung des Windenergieanlagenrotorblatts eingebettet. Die Kante zwischen Sockelabschnitt und Endabschnitt kann insbesondere in der aerodynamischen Fläche des Rotorblatts angeordnet sein. Versuche haben ergeben, dass bei dieser Anordnung selbst unmittelbar in dem Bereich der Kante einschlagende Blitze in der Regel nicht zu Beschädigungen des Windenergieanlagenrotorblatts führen.

Nachfolgend wird die Erfindung anhand eines in drei Figuren dargestellten Ausführungsbeispiels näher erläutert.
- Fig. 1: zeigt einen erfindungsgemäßen Blitzrezeptor im Querschnitt;
- Fig. 2: zeigt den Blitzrezeptor aus Fig. 1 in einer Draufsicht von der Seite;
- Fig. 3: zeigt den Blitzrezeptor aus Fig. 1 in einer Draufsicht von oben.

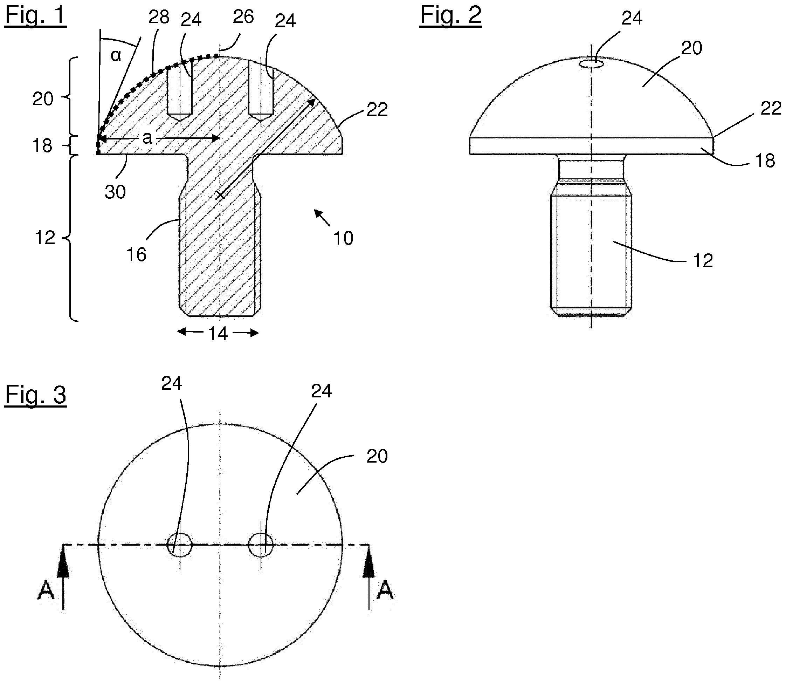

Der Blitzrezeptor 10 aus Figur 1 hat einen Befestigungsabschnitt 12, der zylindrisch ausgebildet ist mit einem Außendurchmesser 14 und einem Außengewinde 16.

An den Befestigungsabschnitt 12 schließt sich der Kopf des Blitzrezeptors an, welcher aus einem Sockelabschnitt 18 und einem Endabschnitt 20 besteht. Sockelabschnitt 18 und Endabschnitt 20 grenzen an einer umlaufenden Kante 22 aneinander, die einen Kreis mit einem Radius a beschreibt.

Der gesamte Blitzrezeptor 10 ist, mit Ausnahme zweier zylindrischer Öffnungen 24 im Endabschnitt 20 zur Aufnahme eines Steckschlüssels, rotationssymmetrisch zur Rotationsachse 26 ausgebildet.

Die den Kopf umschreibende Rotationsfläche wird von einer in Figur 1 punktiert dargestellten Kurve 28 erzeugt, die an der Kante 22 um einen Winkel α in Richtung zur Rotationsachse 26 hin abknickt. Im dargestellten Ausführungsbeispiel beträgt der Winkel α etwa 30°. Im Bereich des Sockelabschnitts 18 verläuft die erzeugende Kurve 28 geradlinig. Im Bereich des Endabschnitts 20 weist die erzeugende Kurve 28 eine gleichmäßige Krümmung mit Krümmungsradius R auf, der im Beispiel etwa das 1,5-fache des Radius a beträgt.

Der Sockelabschnitt 18 weist an seiner dem Endabschnitt 20 gegenüberliegenden Seite eine kreisringförmige Fläche 30 auf, über die der Kontakt zu einer Blitzrezeptorbasis hergestellt werden kann.

Die Figuren 2 und 3 zeigen die bereits im Zusammenhang mit der Figur 1 erläuterten Elemente des Blitzrezeptors 10. In der Figur 3 ist die Anordnung der beiden Öffnungen 24 besonders gut erkennbar. Außerdem ist dort die Anordnung der Schnittebene der Figur 1 mit A-A bezeichnet.

### Liste der verwendeten Bezugszeichen

- 10: Blitzrezeptor
- 12: Befestigungsabschnitt
- 14: Außendurchmesser
- 16: Außengewinde
- 18: Sockelabschnitt
- 20: Endabschnitt
- 22: Kante
- 24: Öffnung
- 26: Rotationsachse
- 28: erzeugende Kurve
- 30: kreisringförmige Fläche
- α: Winkel
- a: Radius
- R: Krümmungsradius

## Patentansprüche

1. Blitzrezeptor (10) für ein Windenergieanlagenrotorblatt mit einem Befestigungsabschnitt (12) und einem rotationssymmetrischen Kopf, der einen Sockelabschnitt (18) und einen konvex gekrümmten Endabschnitt (20) aufweist, wobei der Sockelabschnitt (18) und der Endabschnitt (20) an einer Kante (22) aneinandergrenzen, die einen Kreis mit einem Radius a beschreibt, **dadurch gekennzeichnet, dass** eine eine Rotationsfläche des Kopfes erzeugende Kurve (28) an der Kante (22) um einen Winkel (α) im Bereich von 5° bis 45° in Richtung zu einer Rotationsachse (26) hin abknickt und im Bereich des Endabschnitts (20) eine Krümmung aufweist, deren Krümmungsradius (R) überall im Bereich von a bis 3 a liegt.

2. Blitzrezeptor (10) nach Anspruch 1, **dadurch gekennzeichnet, dass** der Sockelabschnitt (18) eine Länge im Bereich von 1 mm bis 5 mm aufweist.

3. Blitzrezeptor (10) nach Anspruch 1 oder 2, **dadurch gekennzeichnet, dass** der Sockelabschnitt (18) zylindrisch ist.

4. Blitzrezeptor (10) nach einem der Ansprüche 1 bis 3, **dadurch gekennzeichnet, dass** der Sockelabschnitt (18) an seinem von dem Endabschnitt (20) entfernten Ende eine kreisringförmige Kontaktfläche (30) aufweist.

5. Blitzrezeptor (10) nach einem der Ansprüche 1 bis 4, **dadurch gekennzeichnet, dass** der Endabschnitt (20) eine Länge im Bereich von a/2 bis a aufweist.

6. Blitzrezeptor (10) nach einem der Ansprüche 1 bis 5, **dadurch gekennzeichnet, dass** der Endabschnitt (20) einen einheitlichen Krümmungsradius (R) aufweist.

7. Blitzrezeptor (10) nach einem der Ansprüche 1 bis 6, **dadurch gekennzeichnet, dass** der Befestigungsabschnitt (12) einen Außendurchmesser (14) aufweist, der kleiner ist als der Radius a.

8. Blitzrezeptor (10) nach einem der Ansprüche 1 bis 7, **dadurch gekennzeichnet, dass** der Befestigungsabschnitt (12) ein Außengewinde (14) aufweist.

9. Blitzrezeptor (10) nach einem der Ansprüche 1 bis 8, **dadurch gekennzeichnet, dass** der Kopf eine oder mehrere Öffnungen (24) zum Einsetzen eines Steckschlüssels aufweist.

10. Blitzrezeptor (10) nach einem der Ansprüche 1 bis 9, **dadurch gekennzeichnet, dass** der Blitzrezeptor (10) einteilig aufgebaut ist.

11. Blitzrezeptor (10) nach einem der Ansprüche 1 bis 10, **dadurch gekennzeichnet, dass** der Blitzrezeptor (10) aus Edelstahl, Kupfer, Aluminium, Messing, einem anderen Metall oder einer Legierung aus den genannten Materialien besteht.

12. Windenergieanlagenrotorblatt mit einem Blitzrezeptor (10) nach einem der Ansprüche 1 bis 11.

13. Windenergieanlagenrotorblatt nach Anspruch 12, **gekennzeichnet durch** eine Blitzrezeptorbasis, mit der der Blitzrezeptor (10) verschraubt ist.

14. Windenergieanlagenrotorblatt nach Anspruch 12 oder 13, **dadurch gekennzeichnet, dass** der Endabschnitt (20) des Blitzrezeptors (10) aus einer aerodynamischen Fläche des Windenergieanlagenrotorblatts heraussteht.

15. Windenergieanlagenrotorblatt nach einem der Ansprüche 12 bis 14, **dadurch gekennzeichnet, dass** der Sockelabschnitt (18) in eine Wandung des Windenergieanlagenrotorblatts eingebettet ist.

## Claims

1. A lightning receptor (10) for a wind turbine rotor blade comprising a mounting portion (12) and a rotationally symmetric head having a base portion (18) and a convexly curved end portion (20), wherein the base portion (18) and the end portion (20) about each other at an edge (22) describing a circle with a radius a, **characterized in that** a curve (28) generating a surface of rotation of the head is bent at the edge (22) by an angle (α) in the range of 5° to 45° in the direction of an axis of rotation (26) and includes a curvature in the region of the end portion (20) whose radius of curvature (R) is everywhere in the range of a to 3 a.

2. A lightning receptor (10) according to claim 1, **characterized in that** the base portion (18) has a length in the range of 1 mm to 5 mm.

3. A lightning receptor (10) according to claim 1 or 2, **characterized in that** the base portion (18) is cylindrical.

4. A lightning receptor (10) according to one of claims 1 to 3, **characterized in that** the base portion (18) comprises an annular contact surface (30) at its end remote from the end portion (20).

5. A lightning receptor (10) according to any one of claims 1 to 4, **characterized in that** the end portion (20) comprises a length in the range of a/2 to a.

6. A lightning receptor (10) according to one of claims 1 to 5, **characterized in that** the end portion (20) comprises a uniform radius of curvature (R).

7. A lightning receptor (10) according to one of claims 1 to 6, **characterized in that** the mounting portion (12) comprises an outer diameter (14) which is smaller than the radius a.

8. A lightning receptor (10) according to one of claims 1 to 7, **characterized in that** the mounting portion (12) comprises an external thread (14).

9. A lightning receptor (10) according to one of claims 1 to 8, **characterized in that** the head comprises one or more openings (24) for the insertion of a socket wrench.

10. A lightning receptor (10) according to any one of claims 1 to 9, **characterized in that** the lightning receptor (10) is constructed in a single piece.

11. A lightning receptor (10) according to any of claims 1 to 10, **characterized in that** the lightning receptor (10) is made of stainless steel, copper, aluminium, brass, another metal or an alloy of said materials.

12. A wind turbine rotor blade with a lightning receptor (10) according to any of claims 1 to 11.

13. A wind turbine rotor blade according to claim 12, **characterized by** a lightning receptor base to which the lightning receptor (10) is bolted.

14. A wind turbine rotor blade according to claim 12 or 13, **characterized in that** the end portion (20) of the lightning receptor (10) protrudes from an aerodynamic surface of the wind turbine rotor blade.

15. A wind turbine rotor blade according to one of claims 12 to 14, **characterized in that** the base portion (18) is embedded in a wall of the wind turbine rotor blade.

## Revendications

1. Récepteur de foudre (10) pour une pale de rotor d'éolienne avec une section de fixation (12) et une tête à symétrie de rotation, laquelle présente une section de socle (18) et une section d'extrémité (20) courbée de manière convexe, dans lequel la section de socle (18) et la section d'extrémité (20) sont adjacentes au niveau d'un bord (22) décrivant un cercle avec un rayon a, **caractérisé en ce qu'**une courbe (28) réalisant une surface de rotation de la tête se coude en direction d'un axe de rotation (26) selon un angle (a) dans la plage de 5° à 45° au niveau du bord (22) et présente une courbure dans la région de la section d'extrémité (20), dont le rayon de courbure (R) se situe partout dans la plage de a à 3a.

2. Récepteur de foudre (10) selon la revendication 1, **caractérisé en ce que** la section de socle (18) présente une longueur dans la plage de 1 mm à 5 mm.

3. Récepteur de foudre (10) selon la revendication 1 ou 2, **caractérisé en ce que** la section de socle (18) est cylindrique.

4. Récepteur de foudre (10) selon l'une des revendications 1 à 3, **caractérisé en ce que** la section de socle (18) présente une surface de contact (30) annulaire à son extrémité éloignée de la section d'extrémité (20).

5. Récepteur de foudre (10) selon l'une des revendications 1 à 4, **caractérisé en ce que** la section d'extrémité (20) présente une longueur dans la plage de a/2 à a.

6. Récepteur de foudre (10) selon l'une des revendications 1 à 5, **caractérisé en ce que** la section d'extrémité (20) présente un rayon de courbure (R) uniforme.

7. Récepteur de foudre (10) selon l'une des revendications 1 à 6, **caractérisé en ce que** la section de fixation (12) présente un diamètre extérieur (14) inférieur au rayon a.

8. Récepteur de foudre (10) selon l'une des revendications 1 à 7, **caractérisé en ce que** la section de fixation (12) présente un filetage extérieur (14).

9. Récepteur de foudre (10) selon l'une des revendications 1 à 8, **caractérisé en ce que** la tête présente une ou plusieurs ouvertures (24) pour l'insertion d'une clé à douille.

10. Récepteur de foudre (10) selon l'une des revendications 1 à 9, **caractérisé en ce que** le récepteur de foudre (10) est conçu en une seule pièce.

11. Récepteur de foudre (10) selon l'une des revendications 1 à 10, **caractérisé en ce que** le récepteur de foudre (10) est constitué d'acier inoxydable, de cuivre, d'aluminium, de laiton ou d'un autre métal ou d'un alliage desdits matériaux.

12. Pale de rotor d'éolienne avec un récepteur de foudre (10) selon l'une des revendications 1 à 11.

13. Pale de rotor d'éolienne selon la revendication 12, **caractérisée par** une base de récepteur de foudre, dans laquelle est vissé le récepteur de foudre (10).

14. Pale de rotor d'éolienne selon la revendication 12 ou 13, **caractérisée en ce que** la section d'extrémité (20) du récepteur de foudre (10) fait saillie à partir d'une surface aérodynamique de la pale de rotor d'éolienne.

15. Pale de rotor d'éolienne selon l'une des revendications 12 à 14, **caractérisée en ce que** la section de socle (18) est intégrée dans une paroi de la pale de rotor d'éolienne.
